# FASCICULE DE BREVET EUROPEEN

(11) **EP 2 783 989 B1**
(45) Date de publication et mention de la délivrance du brevet: **11.05.2016**
(21) Numéro de dépôt: 14160636.8
(22) Date de dépôt: 19.03.2014
(51) Int. Cl.: B64G 1/22, B64G 1/66, B64G 1/10

(54) **Mât déployable à déploiement spontané autonome et satellite comportant au moins un tel mât**
Ausfahrbarer Mast mit autonomer spontaner Ausfahrbewegung, und Satellit, der mit mindestens einem solchen Mast ausgestattet ist
Deployable mast with standalone spontaneous deployment and satellite comprising at least one such mast

(30) Priorité: 29.03.2013 FR 1300731
(43) Date de publication de la demande: 01.10.2014
(73) Titulaire: Thales, 92200 Neuilly Sur Seine (FR)
(72) Inventeur: Guinot, François, 06150 CANNES-LA-BOCCA (FR); Falzon, Frédéric, 06150 CANNES-LA-BOCCA (FR); Ducarne, Julien, 06400 CANNES (FR)
(74) Mandataire: Nguyen, Dominique

(56) Documents cités:
- EP-A1- 1 676 776
- EP-A1- 2 143 641
- US-A- 4 866 892
- US-A1- 2008 283 670
- ARIDON G ET AL: "On the correction capability of a deployed tape-spring hexapod", MECHANISM AND MACHINE THEORY, PERGAMON, AMSTERDAM, NL, vol. 43, no. 8, 27 septembre 2007 (2007-09-27), pages 1009-1023, XP022711040, ISSN: 0094-114X, DOI: 10.1016/J.MECHMACHTHEORY.2007.07.008 [extrait le 2008-06-10]

## Description

La présente invention concerne un mât déployable à déploiement spontané autonome et un satellite comportant au moins un tel mât. Elle s'applique notamment au domaine des équipements spatiaux qui doivent être déployés en orbite et plus particulièrement aux équipements spatiaux pour satellites, tels que des capteurs ou des antennes ou des instruments à longue focale tels que des télescopes par exemple.

Un mât déployable destiné à relier deux équipements spatiaux éloignés de plusieurs mètres est généralement constitué d'une pluralité de segments de mât empilés les uns au-dessus des autres, articulés entre eux et dont le déploiement est motorisé. Chaque segment de mât est généralement composé de plusieurs poutres rigides articulées par des charnières et bloquées par des verrous. Ce type de mât présente l'inconvénient de nécessiter l'utilisation d'un moteur pour le déploiement et présente un problème de masse importante et de fiabilité des articulations. En outre, les poutres étant rigides, le mât occupe, en position stockée, un encombrement important sous la coiffe d'un lanceur. L'espace alloué, aux structures déployables, sous la coiffe d'un lanceur, étant limité, il est important de réduire l'encombrement du mât lorsqu'il est en position stockée, de façon à en optimiser la surface en position déployée. Ainsi, le mât doit présenter un rapport longueur déployée / volume gerbé le plus élevé possible tout en assurant une faible masse, une stabilité et une rigidité du mât en position déployée suffisamment élevées pour être compatibles des applications spatiales.

US2008/0283670 A1 divulgue les caractéristiques du préambule de la revendication 1.

Le but de l'invention est de réaliser un mât déployable ne comportant pas les inconvénients des mâts déployables existants, présentant l'avantage d'être peu encombrant, léger, simple à réaliser, présentant une optimisation du volume du mât lorsqu'il est stocké sous la coiffe d'un lanceur, permettant un déploiement fiable en orbite sur une grande longueur et la maîtrise du déploiement sans utilisation d'un moteur et permettant une rigidité et une stabilité du mât lorsqu'il est déployé.

Pour cela, l'invention concerne un mât déployable à déploiement spontané autonome comportant au moins un bloc structural élémentaire ayant un axe de déploiement longitudinal X, le bloc structural élémentaire comportant deux plateformes respectivement inférieure et supérieure parallèles à un plan YZ orthogonal à l'axe X et N étages empilés les uns au-dessus des autres parallèlement à l'axe de déploiement longitudinal X, où N est supérieur à 1. Chaque étage comporte au moins trois mètres-ruban longitudinaux flexibles, les N étages étant fixés entre eux deux à deux par l'intermédiaire de plateformes de liaison parallèles au plan YZ, deux étages inférieur et supérieur contigus étant décalés angulairement l'un par rapport à l'autre par une rotation autour de l'axe de déploiement X, les mètres-ruban de l'étage inférieur étant intercalés entre les mètres-ruban de l'étage supérieur.

Avantageusement, tous les mètres-ruban sont identiques et de mêmes longueurs.

Avantageusement, deux étages contigus, respectivement inférieur et supérieur, sont fixés entre eux par une plateforme de liaison commune aux deux étages contigus.

Avantageusement, chaque plateforme supérieure, inférieure et de liaison comportent des pattes de fixation régulièrement réparties, chaque patte de fixation étant dédiée à la fixation d'une extrémité d'un mètre-ruban.

Avantageusement, les deux étages contigus inférieur et supérieur comportent une zone de recouvrement longitudinale.

Avantageusement, les pattes de fixation solidaires de chaque plateforme de liaison sont inclinées par rapport au plan YZ de la plateforme de liaison, l'inclinaison des pattes de fixation des mètres-ruban de l'étage inférieur étant orientée vers le haut du mât et l'inclinaison des pattes de fixation des mètres-ruban de l'étage supérieur étant orientée vers le bas du mât.

Avantageusement, en position stockée, tous les mètres-ruban sont pliés en deux, dans le sens de leur longueur et toutes les plateformes inférieure, de liaison et supérieure d'un même bloc structural sont empilées les unes au-dessus des autres.

Avantageusement, le mât déployable comporte plusieurs blocs structuraux identiques empilés les uns au-dessus des autres.

L'invention concerne également un satellite comportant au moins un mât déployable à déploiement spontané autonome.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma d'un premier exemple de mât en position déployée, le mât comportant un bloc structural élémentaire à un seul étage, selon l'invention ;
- figure 2a : un schéma, en perspective, d'un exemple de mètre-ruban en position déployée, selon l'invention;
- figure 2b : un schéma, en coupe transversale, de la section du mètre-ruban, selon l'invention;
- figure 3 : un schéma en perspective, d'un exemple de plateau inférieur ou supérieur du mât, selon l'invention ;
- figure 4: un schéma d'un deuxième exemple de mât en position déployée, le mât comportant un bloc structural élémentaire à plusieurs étages, selon l'invention ;
- figure 5a : un schéma en perspective d'un exemple de plateforme de liaison entre deux étages contigus d'un même bloc structural élémentaire, selon l'invention ;
- figure 5b : un schéma en perspective d'un exemple de fixation des mètres-ruban de deux étages contigus sur une plateforme de liaison, selon l'invention ;
- figure 6a; un schéma en perspective, illustrant un bloc structural élémentaire du mât en position stockée, les mètres-ruban étant omis, selon l'invention ;
- figure 6b : un schéma en perspective, illustrant un bloc structural élémentaire du mât en position stockée, les mètres-ruban étant repliés vers l'extérieur du mât, selon l'invention ;
- figure 6c : un schéma en perspective, illustrant un bloc structural élémentaire du mât en position stockée, les mètres-ruban étant repliés vers l'intérieur du mât, selon l'invention ;
- figure 7 : un schéma en perspective, illustrant un mât en position stockée, le mât comportant trois blocs structuraux élémentaires empilés et fixés les uns au-dessus des autres, les mètres-ruban étant repliés vers l'extérieur du mât, selon l'invention.

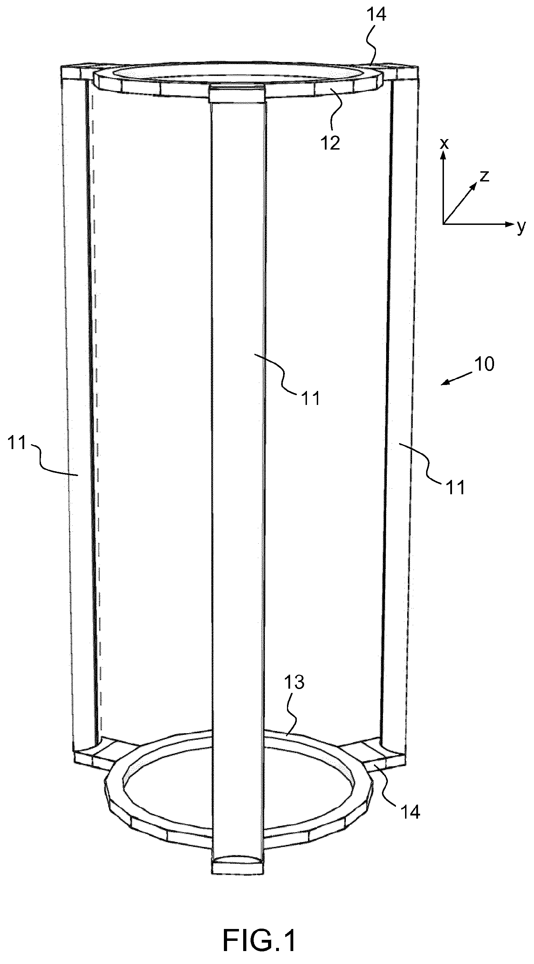

La figure 1 illustre un exemple de mât déployable conforme à l'invention, en position déployée, le mât comportant un bloc structural élémentaire à un seul étage. Le bloc structural élémentaire 10 est constitué d'au moins trois mètres-ruban (en anglais : tape-spring) 11 s'étendant selon un axe de déploiement longitudinal X, une plateforme supérieure 12 et une plateforme inférieure 13. Les deux plateformes inférieure et supérieure sont parallèles à un plan YZ orthogonal à l'axe X. Les mètres-ruban sont tous identiques, ont tous la même longueur et la même forme. Chaque mètre-ruban comporte une extrémité inférieure fixée rigidement sur la plateforme inférieure 13 et une extrémité supérieure fixée rigidement sur la plateforme supérieure 12.

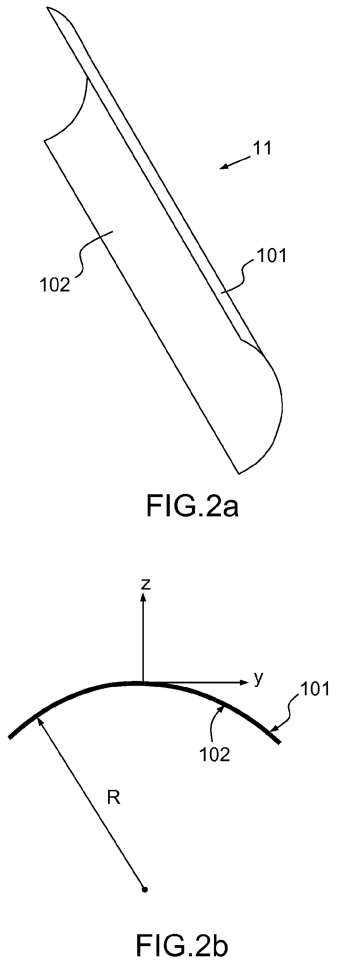

Les mètres-ruban sont connus dans le domaine spatial comme étant des rubans ou des lames flexibles ayant une première face 101 convexe, une deuxième face 102 concave et ayant une section en arc de cercle de rayon de courbure R, comme représenté par exemple sur les figures 2a et 2b. Les mètres-ruban ont une tendance naturelle à se déployer longitudinalement, parallèlement à l'axe de déploiement X, de manière autonome, essentiellement grâce à leur énergie élastique propre, sans utilisation d'un moteur.

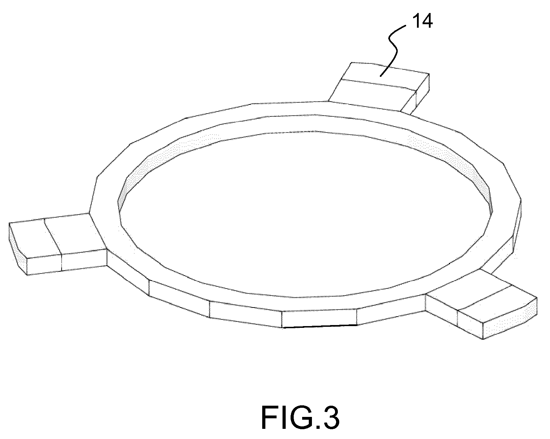

Les plateformes supérieure 12 et inférieure 13 du bloc structural élémentaire 10 peuvent être rigides ou élastiques, et ont une forme de préférence symétrique autour de l'axe X. Chaque plateforme supérieure 12 et inférieure 13 peut par exemple avoir une forme de disque ou d'un anneau, comme représenté par exemple sur la figure 3, et avoir un contour périphérique polygonal ou circulaire. Chaque plateforme supérieure et inférieure comporte des pattes de fixation 14 qui sont de préférence régulièrement réparties sur sa périphérie, chaque patte de fixation étant dédiée à la fixation d'une extrémité d'un mètre-ruban. Dans le cas où le bloc structural élémentaire 10 comporte trois mètres-ruban, chaque plateforme supérieure et inférieure comporte trois pattes de fixation comme représenté sur la figure 3. De préférence, les pattes de fixation 14 sont régulièrement réparties autour de chaque plateforme supérieure 12 ou inférieure 13 et sont situées dans le plan YZ de la plateforme correspondante. Sur les figures 1 et 3, les pattes de fixation 14 sont orientées de façon qu'elles s'étendent vers l'extérieur du bloc structural élémentaire 10 et donc vers l'extérieur du mât, mais il est également possible de les orienter dans un sens opposé de façon qu'elles s'étendent vers l'intérieur du bloc structural élémentaire 10. De même, sur la figure 1, les mètres-ruban sont orientés de façon à présenter leur face concave orientée vers l'extérieur du mât, mais il est également possible de les orienter en sens contraire de façon qu'ils présentent leur face concave orientée vers l'intérieur du mât.

Un bloc structural élémentaire 10 comportant un seul étage est la configuration minimale du mât selon l'invention mais il présente un intérêt limité lorsque des grandes longueurs de mât sont souhaitées car la rigidité du mât diminue lorsque la longueur de chaque mètre-ruban 11 augmente. Il est possible d'augmenter la longueur du mât en empilant plusieurs blocs structuraux élémentaires les uns au-dessus des autres mais lorsque chaque bloc structural ne comporte qu'un seul étage et que le nombre de blocs structuraux devient important, la compacité du mât en position repliée n'est alors pas optimisée.

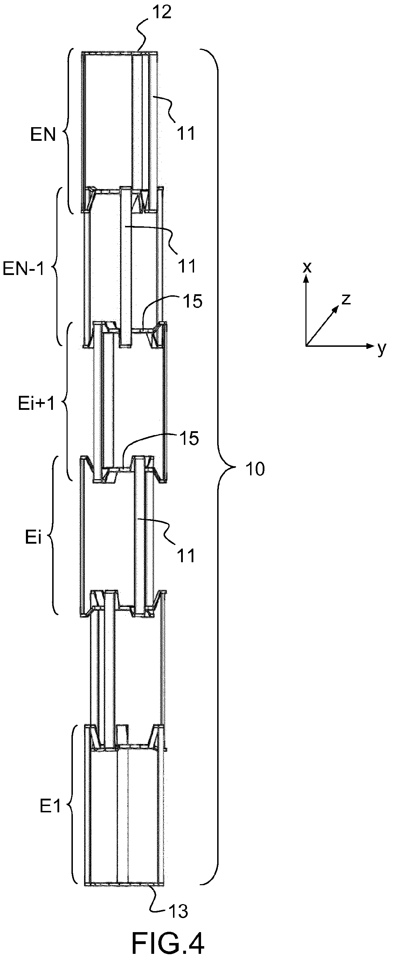

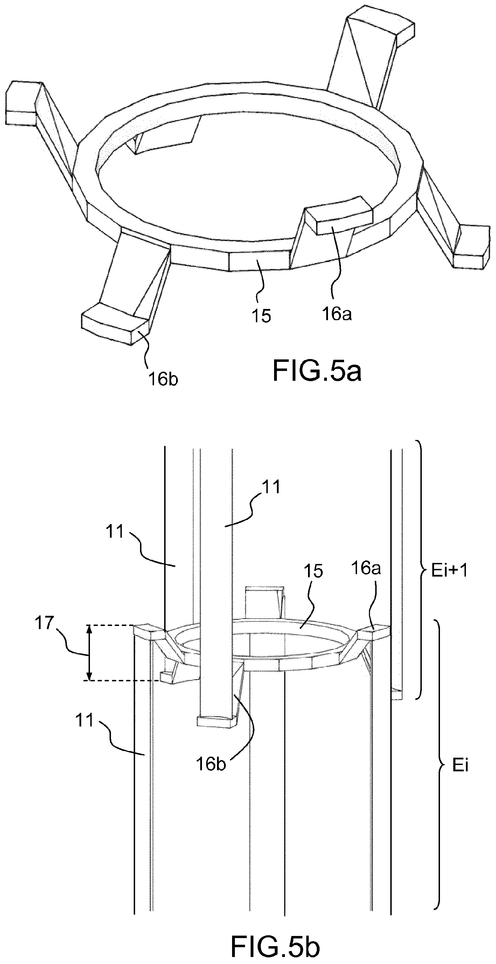

La figure 4 illustre un exemple d'un mât en position déployée, le mât comportant un bloc structural élémentaire 10 constitué d'une plateforme inférieure, d'une plateforme supérieure et de N étages E1,...,Ei, Ei+1,...,EN, où N est un nombre entier supérieur à un et i est compris entre 1 et N-1 inclus, empilés les uns au-dessus des autres parallèlement à l'axe de déploiement longitudinal X et fixés rigidement entre eux deux à deux. Les deux plateformes inférieure 13 et supérieure 12 sont parallèles à un plan YZ orthogonal à l'axe X. Chaque étage comporte au moins trois mètres-ruban 11 s'étendant, en position déployée, parallèlement à l'axe de déploiement longitudinal X, les trois mètres-ruban 11 comportant deux extrémités opposées respectivement fixées sur des plateformes de liaison 15 ou sur la plateforme supérieure 12 ou sur la plateforme inférieure 13. Deux étages contigus Ei et Ei+1 peuvent être fixés entre eux par l'intermédiaire d'une plateforme de liaison 15 commune aux deux étages contigus, la plateforme de liaison 15 pouvant être rigide ou élastique. Comme représenté par exemple sur les figures 5a et 5b, chaque plateforme de liaison 15 a une forme de préférence symétrique autour de l'axe X telle que par exemple, une forme de disque ou d'un anneau et peut avoir un contour périphérique polygonal ou circulaire. Chaque plateforme de liaison comporte des pattes de fixation 16a, 16b, chaque patte de fixation 16a, 16b étant respectivement dédiée à la fixation d'une extrémité d'un mètre-ruban 11 d'un étage inférieur Ei, respectivement d'un étage supérieur Ei+1 contigu à l'étage inférieur Ei. Pour assurer la fixation des extrémités des mètres-ruban 11 des deux étages contigus Ei, Ei+1, le nombre de pattes de fixation 16a, 16b de chaque plateforme de liaison 15 est deux fois plus important que le nombre de mètres-ruban 11 d'un étage Ei du bloc structural élémentaire 10. Ainsi, dans le cas où chaque étage Ei du bloc structural élémentaire comporte trois mètres-ruban, comme représenté sur la figure 4, chaque plateforme de liaison 15 comporte six pattes de fixation, sur lesquelles sont respectivement fixés six mètres-ruban 11 de deux étages contigus inférieur Ei et supérieur Ei+1. Les pattes de fixation 16a, 16b solidaires de chaque plateforme de liaison 15 sont inclinées par rapport au plan YZ de la plateforme de liaison 15, l'inclinaison étant orientée dans des sens opposés pour les mètres-ruban de l'étage supérieur Ei+1 par rapport à l'étage inférieur Ei. Les pattes de fixation 16a des mètres-ruban de l'étage inférieur Ei peuvent être inclinées vers le haut du mât alors que les pattes de fixation 16b des mètres-ruban de l'étage supérieur Ei+1 peuvent être inclinées vers le bas du mât, de façon à créer une zone de recouvrement 17 longitudinale entre deux étages contigus Ei et Ei+1, ce qui présente l'avantage d'augmenter la rigidité du mât et d'améliorer la compacité du bloc structural élémentaire 10 lorsqu'il est replié en position stockée. Deux plateformes de liaison 15 consécutives, appartenant donc à un même étage Ei, comportent ainsi des pattes de fixation 16a, 16b orientées dans des sens opposés par rapport au plan YZ des deux plateformes de liaison. Sur les figures 4, 5a, 5b, les pattes de fixation 16a, 16b solidaires de chaque plateforme de liaison 15 sont montées sur la périphérie externe de chaque plateforme de liaison et s'étendent vers l'extérieur du mât, mais alternativement, il est également possible de monter les pattes de fixation 16a, 16b en sens inverse de façon qu'elles s'étendent vers l'intérieur du mât.

Les extrémités des mètres-ruban 11 de chaque étage Ei peuvent être fixées par encastrement au moyen de brides montées sur les pattes de fixation 16a, 16b des plateformes de liaison 15 ou sur les pattes de fixation 14 des plateformes supérieure 12 ou inférieure 13, ou peuvent être fixées par rivetage ou par collage. Dans le cas où le mât comporte plusieurs blocs structuraux élémentaires 10, les plateformes inférieure 13 et supérieure 12 situées à la base et au sommet de chaque bloc structural élémentaire 10 assurent la liaison entre les mètres-ruban 11 de deux blocs structuraux élémentaires consécutifs.

Préférentiellement, pour que le mât soit équilibré, les pattes de fixations 14, 15a, 15b et les mètres-ruban 11 qui y sont fixés peuvent être régulièrement espacés autour de l'axe de déploiement longitudinal X et les angles séparant deux pattes de fixation de chaque plateforme de liaison peuvent avoir des valeurs identiques.

Deux étages contigus sont décalés angulairement l'un par rapport à l'autre par une rotation autour de l'axe de déploiement X de façon à intercaler les mètres-ruban d'un étage inférieur Ei entre les mètres-ruban d'un étage contigu supérieur Ei+1, et à intercaler les pattes de fixation 16a d'un étage inférieur Ei entre les pattes de fixation 16b d'un étage contigu supérieur Ei+1. Ainsi, les mètres-ruban 11 de deux étages consécutifs, reliés à une même plateforme de liaison 15 sont également décalés angulairement les uns par rapport aux autres.

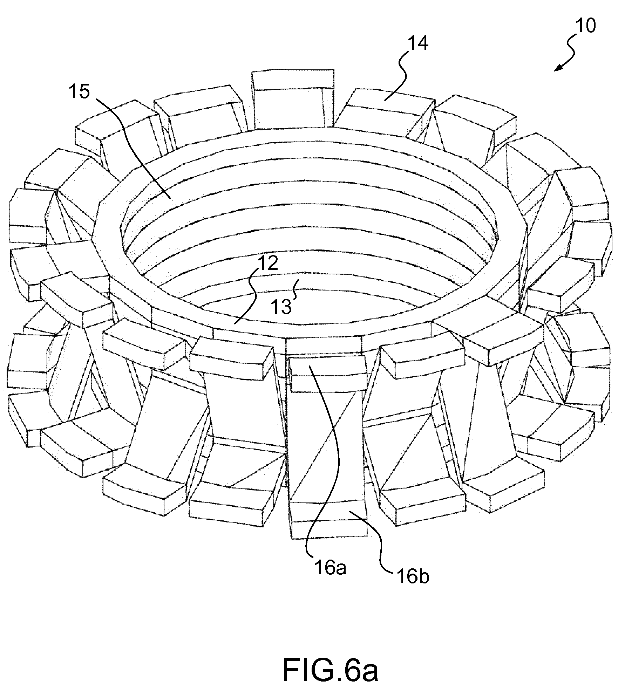

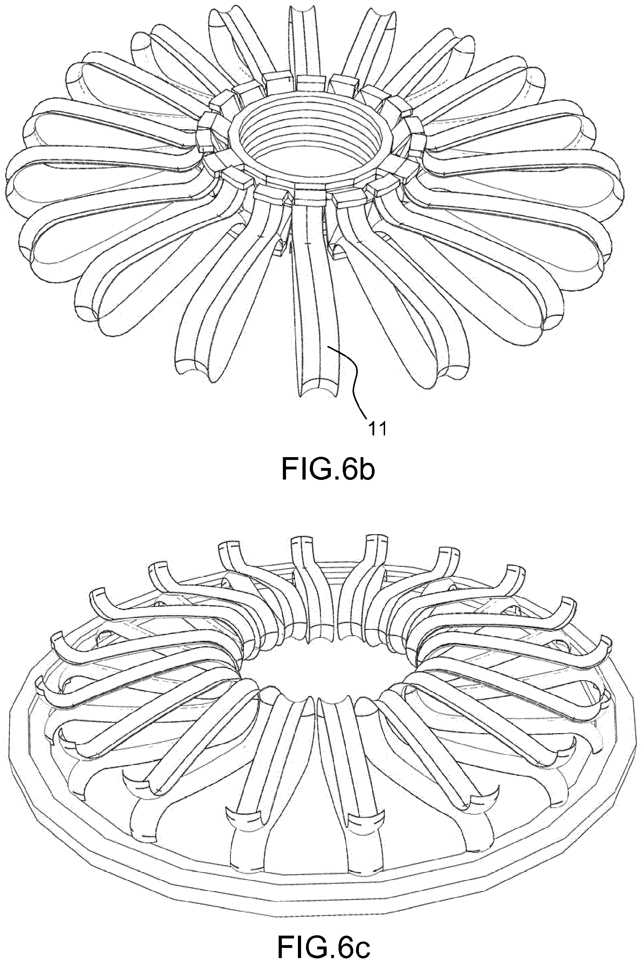

Lorsqu'un bloc structural élémentaire 10 est replié en position stockée, il se trouve dans un état compact et toutes les plateformes supérieure 12, inférieure 13 et de liaison 15 séparant les différents étages du bloc structural élémentaires sont empilées les unes au-dessus des autres comme représenté sur la vue partielle de la figure 6a dans laquelle les mètres-ruban ne sont pas représentés, sur la figure 6b où les mètres-ruban sont représentés repliés vers l'extérieur du mât et sur la vue partielle de la figure 6c sur laquelle seuls des mètres-ruban repliés vers l'intérieur du mât sont représentés. Sur les figures 6b et 6c, le bloc structural élémentaire comporte six étages composés de trois mètres-ruban par étage, soit un total de 18 mètres-ruban régulièrement répartis sur la circonférence d'une couronne annulaire constituée d'un empilement de toutes les plateformes supérieure, inférieure et de liaison du bloc structural élémentaire dans l'état gerbé. Dans cet état compact, les mètres-ruban 11 sont repliés en deux sur eux-mêmes dans le sens de leur longueur, le pliage pouvant être réalisé vers l'extérieur du mât lorsque les pattes de fixation s'étendent vers l'extérieur du mât comme représenté sur la figure 6b, ou vers l'intérieur du mât comme représenté schématiquement sur la figure 6c, lorsque les pattes de fixation 16a, 16b s'étendent vers l'intérieur du mât. Deux plateformes de liaison 15 consécutives, appartenant donc à un même étage Ei, comportent des pattes de fixation 16a, 16b, montées en opposition l'une par rapport à l'autre, dont l'écartement est déterminé de façon à assurer un pliage élastique maximal des mètres-ruban. Cet écartement est identique pour chaque couple de pattes de fixation placées en opposition.

Les mètres-ruban 11 sont réalisés dans un matériau compatible avec un environnement spatial et peuvent être réalisés dans un matériau métallique ou dans un matériau composite tel que par exemple des fibres de carbone noyées dans une résine époxy ou dans une résine cyanate. Les matériaux composites sont préférés car ils ont un coefficient de dilatation beaucoup plus faible en température que les matériaux métalliques. Les plateformes supérieure et inférieure et les plateformes de liaison sont de préférence en carbone.

Le mât ne comporte aucune articulation, ni aucune charnière, ni aucun pivot, ni aucun moteur. En position stockée, tous les mètres-ruban 11 de tous les étages structuraux élémentaires Ei stockent de l'énergie élastique due aux contraintes qui les maintiennent en position pliée en deux. Le maintien des mètres-ruban 11 en position pliée est assuré par un système de gerbage. Le déploiement du mât est réalisé de manière passive par relâchement des contraintes sur les mètres-ruban lors de leur dépliement et à la libération de l'énergie élastique stockée par les mètres-ruban. Pour que le déploiement ne soit pas trop violent, il est possible d'utiliser en outre un moyen de freinage permettant de contrôler le déploiement du mât. Par exemple, la vitesse du dépliement des mètres-ruban peut être contrôlée par un déroulement progressif d'un câble géré par un moteur.

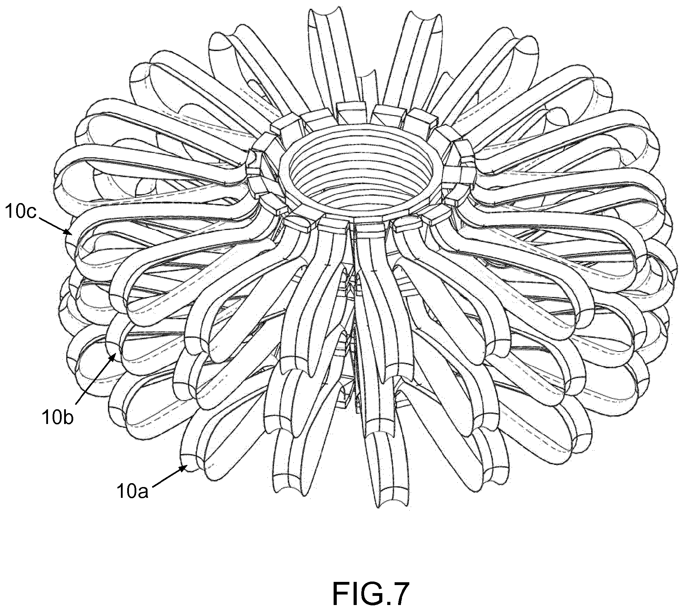

La longueur du mât peut être augmentée ou diminuée de façon simple en augmentant le nombre de blocs structuraux élémentaires successifs empilés les uns au-dessus des autres le long de l'axe de déploiement longitudinal X comme représenté par exemple sur la figure 7 sur laquelle le mât en comporte trois blocs structuraux 10a, 10b, 10c empilés les uns au-dessus des autres, les trois blocs structuraux étant dans leur état gerbé donc compact. Sur l'exemple de réalisation de la figure 7, chaque bloc structural 10a, 10b, 10c en position gerbée correspond à une couronne annulaire constituée de six étages composés de trois mètres-ruban par étage, soit un total de 18 mètres-ruban régulièrement répartis sur la circonférence de la couronne annulaire. Les trois couronnes annulaires empilées correspondent aux trois blocs structuraux élémentaires.

Pour des applications spatiales, le mât peut être utilisé par exemple, pour éloigner un appareil ou une antenne de la caisse d'un satellite. Dans ce cas, la plateforme inférieure 13 de l'étage inférieur du mât est fixée sur la caisse du satellite et l'appareil à éloigner est fixé à la plateforme supérieure 12 de l'étage supérieur du mât.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, toutes les figures montrent une configuration des mètres-ruban présentant leur face concave 102 orientée vers l'extérieur du mât, mais alternativement, il est également possible de retourner tous les mètres-ruban 11 de 180° et de les monter de façon qu'ils présentent leur face convexe 101 orientée vers l'extérieur du mât.

## Revendications

1. Mât déployable à déploiement spontané autonome comportant au moins un bloc structural élémentaire (10, 10a, 10b, 10c) ayant un axe de déploiement longitudinal X, le bloc structural élémentaire comportant deux plateformes respectivement inférieure (13) et supérieure (12) parallèles à un plan YZ orthogonal à l'axe X et N étages (E1,..., Ei, Ei+1,..., EN) empilés les uns au-dessus des autres parallèlement à l'axe de déploiement longitudinal X, où N est supérieur à 1 et où i est compris entre 1 et N-1, et chaque étage (Ei) comporte au moins trois mètres-ruban (11) longitudinaux flexibles, les N étages étant fixés entre eux deux à deux par l'intermédiaire de plateformes de liaison (15) parallèles au plan YZ **caractérisé en ce que** deux étages inférieur et supérieur contigus (Ei, Ei+1) sont décalés angulairement l'un par rapport à l'autre par une rotation autour de l'axe de déploiement X, les mètres-ruban de l'étage inférieur (Ei) étant intercalés entre les mètres-ruban de l'étage supérieur (Ei+1).

2. Mât déployable selon la revendication 1, **caractérisé en ce que** tous les mètres-ruban (11) sont identiques et de mêmes longueurs.

3. Mât déployable selon la revendication 2, **caractérisé en ce que** deux étages contigus (Ei, Ei+1), respectivement inférieur et supérieur, sont fixés entre eux par une plateforme de liaison (15) commune aux deux étages contigus (Ei, Ei+1).

4. Mât déployable selon la revendication 3, **caractérisé en ce que** chaque plateforme supérieure (12), inférieure (13) et de liaison (15) comporte des pattes de fixation (14, 16a, 16b) régulièrement réparties, chaque patte de fixation étant dédiée à la fixation d'une extrémité d'un mètre-ruban.

5. Mât déployable selon la revendication 4, **caractérisé en ce que** les deux étages inférieur (Ei) et supérieur (Ei+1) contigus comportent une zone de recouvrement longitudinale (17).

6. Mât déployable selon la revendication 5, **caractérisé en ce que** les pattes de fixation (16a, 16b) solidaires de chaque plateforme de liaison (15) sont inclinées par rapport au plan YZ de la plateforme de liaison, l'inclinaison des pattes de fixation (16a) des mètres-ruban de l'étage inférieur (Ei) étant orientée vers le haut du mât et l'inclinaison des pattes de fixation (16b) des mètres-ruban de l'étage supérieur (Ei+1) étant orientée vers le bas du mât.

7. Mât déployable selon l'une des revendications 1 à 6, **caractérisé en ce que**, en position stockée, tous les mètres-ruban (11) sont pliés en deux, dans le sens de leur longueur et **en ce que** toutes les plateformes inférieure, de liaison et supérieure d'un même bloc structural (10, 10a, 10b, 10c) sont empilées les unes au-dessus des autres.

8. Mât déployable selon l'une des revendications 1 à 7, **caractérisé en ce qu'**il comporte plusieurs blocs structuraux identiques (10a, 10b, 10c) empilés les uns au-dessus des autres.

9. Satellite **caractérisé en ce qu'**il comporte au moins un mât déployable à déploiement spontané autonome, selon l'une des revendications précédentes.

## Patentansprüche

1. Ausfahrbarer Mast mit autonomer spontaner Ausfahrbewegung, der wenigstens einen Grundstrukturblock (10, 10a, 10b, 10c) mit einer longitudinalen Ausfahrachse X umfasst, wobei der Grundstrukturblock jeweils zwei Plattformen, eine untere (13) und eine obere (12), parallel zu einer Ebene YZ orthogonal zur Achse X und N Stufen (E1, ..., Ei, Ei+1, ..., EN) umfasst, die parallel zur longitudinalen Ausfahrachse X übereinander gestapelt sind, wobei N größer als 1 ist und wobei i zwischen 1 und N-1 ist, und wobei jede Stufe (Ei) wenigstens drei flexible longitudinale Bandfedern (11) umfasst, wobei die N Stufen paarweise über Verbindungsplattformen (15) parallel zur Ebene YZ aneinander befestigt sind, **dadurch gekennzeichnet, dass** zwei benachbarte untere und obere Stufen (Ei, Ei+1) winkelmäßig relativ zueinander durch eine Drehung um die Ausfahrachse X voneinander versetzt sind, wobei sich die Bandfedern der unteren Stufe (Ei) zwischen den Bandfedern der oberen Stufe (Ei+1) befinden.

2. Ausfahrbarer Mast nach Anspruch 1, **dadurch gekennzeichnet, dass** alle Bandfedern (11) identisch sind und dieselbe Länge haben.

3. Ausfahrbarer Mast nach Anspruch 2, **dadurch gekennzeichnet, dass** zwei benachbarte Stufen (Ei, Ei+1), jeweils eine untere und eine obere, durch eine den zwei benachbarten Stufen (Ei, Ei+1) gemeinsame Verbindungsplattform (15) aneinander befestigt sind.

4. Ausfahrbarer Mast nach Anspruch 3, **dadurch gekennzeichnet, dass** die obere (12), die untere (13) und die Verbindungs- (15) Plattform gleichmäßig verteilte Befestigungslaschen (14, 16a, 16b) umfassen, wobei jede Befestigungslasche zum Befestigen eines Endes einer Bandfeder bestimmt ist.

5. Ausfahrbarer Mast nach Anspruch 4, **dadurch gekennzeichnet, dass** die beiden, die untere (Ei) und die obere (Ei+1), benachbarten Stufen eine longitudinale Überlappungszone (17) aufweisen.

6. Ausfahrbarer Mast nach Anspruch 5, **dadurch gekennzeichnet, dass** die mit jeder Verbindungsplattform (15) fest verbundenen Befestigungslaschen (16a, 16b) mit Bezug auf die Ebene YZ der Verbindungsplattform geneigt sind, wobei die Neigung der Befestigungslaschen (16a) der Bandfedern der unteren Stufe (Ei) zum oberen Ende des Mastes hin orientiert sind und die Neigung der Befestigungslaschen (16b) der Bandfedern der oberen Stufe (Ei+1) zum unteren Ende des Masts hin orientiert sind.

7. Ausfahrbarer Mast nach einem der Ansprüche 1 bis 6, **dadurch gekennzeichnet, dass** in der Verstauposition alle Bandfedern (11) in ihrer Längenrichtung gefaltet sind, und dadurch, dass die untere, die Verbindungs- und die obere Plattform eines selben Strukturblocks (10, 10a, 10b, 10c) alle übereinander gestapelt sind.

8. Ausfahrbarer Mast nach einem der Ansprüche 1 bis 7, **dadurch gekennzeichnet, dass** er mehrere übereinander gestapelte identische Strukturblöcke (10a, 10b, 10c) umfasst.

9. Satellit, **dadurch gekennzeichnet, dass** er wenigstens einen ausfahrbaren Mast mit autonomer spontaner Ausfahrbewegung nach einem der vorherigen Ansprüche umfasst.

## Claims

1. Deployable mast with independent spontaneous deployment comprising at least one elementary structural unit (10, 10a, 10b, 10c) which has a longitudinal deployment axis X, the elementary structural unit comprising two platforms, a lower platform (13) and an upper platform (12), respectively, which are parallel with a plane YZ which is orthogonal to the axis X and N levels (E1,...Ei, Ei+1..., EN) which are stacked one above the other parallel with the longitudinal deployment axis X, where N is greater than 1 and where i is between 1 and N-1 and each level (Ei) comprises at least three flexible longitudinal tape-springs (11), the N levels being fixed together in pairs by means of connection platforms (15) which are parallel with the YZ plane, **characterised in that** two contiguous lower and upper levels (Ei, Ei+1) are offset angularly relative to each other by means of a rotation about the deployment axis X, the tape-springs of the lower level (Ei) being interposed between the tape-springs of the upper level (Ei+1).

2. Deployable mast according to claim 1, **characterised in that** all the tape-springs (11) are identical and have the same lengths.

3. Deployable mast according to claim 2, **characterised in that** two contiguous levels, a lower level and an upper level (Ei, Ei+1), respectively, are fixed together by means of a connection platform (15) which is common to the two contiguous levels (Ei, Ei+1).

4. Deployable mast according to claim 3, **characterised in that** each upper platform (12), lower platform (13) and connection platform (15) comprises fixing lugs (14, 16a, 16b) which are regularly distributed, each fixing lug being dedicated to fixing an end of a tape-springs.

5. Deployable mast according to claim 4, **characterised in that** the two contiguous levels, a lower level (Ei) and an upper level (Ei+1), comprise a longitudinal overlap zone (17).

6. Deployable mast according to claim 5, **characterised in that** the fixing lugs (16a, 16b) which are fixedly joined to each connection platform (15) are inclined relative to the plane YZ of the connection platform, the inclination of the fixing lugs (16a) of the tape-springs of the lower level (Ei) being orientated towards the top of the mast and the inclination of the fixing lugs (16b) of the tape-springs of the upper level (Ei+1) being orientated towards the bottom of the mast.

7. Deployable mast according to any one of claims 1 to 6, **characterised in that**, in the stored position, all the tape-springs (11) are folded in two in the direction of their length and **in that** all the lower, connection and upper platforms of the same structural unit (10, 10a, 10b, 10c) are stacked one above the others.

8. Deployable mast according to any one of claims 1 to 7, **characterised in that** it comprises a plurality of identical structural units (10a, 10b, 10c) which are stacked one above the others.

9. Satellite, **characterised in that** it comprises at least one deployable mast with independent spontaneous deployment, according to any one of the preceding claims.
